# EUROPÄISCHE PATENTSCHRIFT

(11) **EP 0 527 248 B1**
(45) Veröffentlichungstag und Bekanntmachung des Hinweises auf die Patenterteilung: **24.04.1996**
(21) Anmeldenummer: 91113359.3
(22) Anmeldetag: 08.08.1991
(51) Int. Cl.: G05B 19/418, B23Q 37/00, B23B 31/16

(54) **Werkzeugmaschinensteuerungssystem zur Bearbeitung von plattenförmigen Werkstücken**
Machine tool control system for machining of sheet material
Système de commande de machine-outils pour l'usinage de pièces planes

(43) Veröffentlichungstag der Anmeldung: 17.02.1993
(73) Patentinhaber: SIEMENS AKTIENGESELLSCHAFT, D-80333 München (DE)
(72) Erfinder: Friedrich, Ralf, Dipl.-Ing., W-8520 Erlangen (DE); Nickel, Eckhard, Dipl.-Ing., W-8552 Höchstadt (DE)

(56) Entgegenhaltungen:
- US-A- 4 422 150
- US-A- 4 755 949

## Beschreibung

Bei der Fertigung plattenförmiger Werkstücke werden sogenannte Mehrfachbearbeitungsmaschinen eingesetzt, die über mehrere Bearbeitungstechnologien, z.B. Bohren, Fräsen, Nutsägen, Kantenumleimen verfügen. Im Gegensatz zu besonders aus der Metallbearbeitung bekannten Werkzeugmaschinen, bei denen gewöhnlich verschiedene Werkzeuge in einem Werkzeugrevolver oder einem anderen Werkzeugmagazin untergebracht sind und nach Bedarf aus diesen entnommen werden können, sind bei den Mehrfachbearbeitungsmachinen alle verfügbaren Werkzeuge, wie Bohrer, Fräser, Nutsäge, gemeinsam auf einem fahrbaren Werkzeugträger angebracht. Zur Positionierung eines Werkzeugs an eine Arbeitsposition wird dabei der gesamte Werkzeugträger in der Ebene über dem plattenförmigen Werkstück so verfahren, daß das Werkzeug, mit dem ein Bearbeitungsvorgang durchgeführt werden soll, sich über dem Bearbeitungspunkt befindet. Dazu muß der Werkzeugmaschinensteuerung die Position des jeweiligen Werkzeugs bzw. der jeweiligen Werkzeugspindel bezüglich des Werkzeugträgernullpunktes bekannt sein. Bei jeder Vorgabe eines für die Bearbeitung ausgewählten Werkzeuges muß dann die Werkzeugmaschinensteuerung die Lage des Bearbeitungswerkzeuges bezüglich dem Werkzeugträgernullpunkt berücksichtigen und den Werkzeugträger entsprechend verfahren.

Aus der US-A-4 755 949 ist eine Werkzeugmaschinensteuerung zur Bearbeitung von Drehteilen bekannt, bei der jeweils nur ein Werkzeug zur Bearbeitung eines Werkstückes zur Anwendung gelangt. Weitere Werkzeuge können dabei aus einem Revolver-magazin entnommen werden. Eine gleichzeitige Bearbeitung durch mehrere Werkzeuge ist mit dieser Steuerung nicht möglich. Aufgabe der Erfindung ist es, eine Werkzeugmaschinensteuerung zu erhalten, die dem Werkzeugmaschinenhersteller größtmögliche Freiheit bei der Konstruktion der Maschine läßt und dem Anwender eine möglichst einfache Bedienung erlaubt.

Diese Aufgabe wird durch eine Werkzeugmaschinensteuerung zur Bearbeitung von plattenförmigen Werkstücken, insbesondere aus Holz oder Kunststoff, zur Steuerung der Position und der Funktionen eines Werkzeugträgers in einem Werkzeugträgerkoordinatensystem gelöst, wobei am Werkzeugträger mindestens ein Bearbeitungsaggregat mit mindestens zwei über ein Getriebe angetriebenen Werkzeugspindeln angebracht ist, wobei dem Werkzeugträger ein Werkzeugträger-Bezugspunkt und jedem Bearbeitungsaggregat ein Aggregats-Bezugspunkt zuordbar und in der Steuerung hinterlegbar ist, wobei die Lage der Werkzeugspindeln über den Aggregatsbezugspunkten und die Lage der Aggregatsbezugspunkte gegenüber dem Werkzeugträger-Bezugspunkt vorgebbar ist und wobei nach Vorgabe einer Werkzeugspindel und einer Position für diese im Werkzeugträger-Koordinatensystem eine Positionierung des Werkzeugträgers erfolgt, indem die Lage der vorgegebenen Werkzeugspindel bezüglich des Werkzeugträgerbezugspunktes als Positionskorrektur berücksichtigt wird. Dadurch wird dem Werkzeugmaschinenhersteller eine große Freiheit in bezug auf die Konstruktion des Werkzeugträgers und der daran angebrachten Aggregate gewährt. Die Lage der Werkzeugspindeln zu einem jeweiligen Aggregate-Nullpunkt kann beispielsweise direkt aus der Konstruktionszeichnung eines jeweiligen Aggregates entnommen und in die Werkzeugmaschinensteuerung eingegeben werden. Für die Eingabe der Lage der Aggregate-Nullpunkte zum Werkzeugträger-Nullpunkt kann dann die jeweilige Position der Werkzeugspindeln unberücksichtigt bleiben.

Eine vorteilhafte Ausbildung der Erfindung ergibt sich, wenn eine Werkzeugmaschinensteuerung mit einem numerischen und einem speicherprogrammierbaren Steuerteil verwendet wird, wobei mindestens zwei in Werkzeugspindelachsrichtung in Arbeitsposition verschiebbare Werkzeugspindeln parallel angeordnet sind, wobei jede ausgewählte Werkzeugspindel durch Vorgabe eines steuerbefehls gegenüber dem nichtausgewählten in Arbeitsposition gebracht wird und wobei eine Positionierung und eine Vorschubbewegung des Werkzeugträgers vom numerischen Steuerteil und die Verschiebung der Werkzeugspindel vom speicherprogrammierbaren Steuerteil ausgeführt wird. Damit läßt sich mit nur einem Befehl, mit dem der Name des ausgewählten Werkzeugs bzw. der Werkzeugspindel in der es sich befindet, und die Position, an die dieses Werkzeug gebracht werden soll, vorgegeben wird, die Verfahrbewegung des Werkzeugträgers einleiten und das Werkzeug in Arbeitsstellung bringen.

Durch die Zuordnung der Geometrieverrechnung - d.i. die Berücksichtigung der Lage der Werkzeugspindeln bezüglich des werkzeugträgernullpunktes unter Einbeziehung des Aggregate-Nullpunktes - und der Positionsberechnung zum numerischen Steuerteil einerseits und der Werkzeugspindelanwahl zum speicherprogrammierbaren Steuerteil andererseits, lassen sich die Werkzeugspindeln bereits während des Positioniervorganges zeitsparend in Arbeitsposition bringen. Der eigentliche Bearbeitungsvorgang wird dann durch Verfahren des Werkzeugträgers in Z-Richtung, d.h. in Richtung auf das plattenförmige Werkstück durchgeführt. Dies ist jedoch nur dann möglich, wenn sichergestellt ist, daß sich der Werkzeugträger in einer solchen Entfernung vom Werkstück befindet, daß ein Werkzeug, wenn es in Arbeitsposition gebracht ist, noch beabstandet zum Werkstück verläuft. Nach einer weiteren vorteilhaften Ausbildung der Erfindung wird dies dadurch erreicht, daß vor der Axialverschiebung einer Werkzeugspindel die Werkstückgeometrie, d.h. die abgespeicherten oder vom Anwender abgefragten relevanten geometrischen Daten des Werkstückes, geprüft werden und die Axialverschiebung erst dann eingeleitet wird, wenn der Werkzeugträger so positioniert ist, daß das in Arbeitsposition zu bringende Werkzeug einen Sicherheitsabstand zum Werkstück aufweist. Gegebenenfalls müßte vor der Verfahrbewegung in der Ebene über dem Werkstück zunächst eine Verfahrbewegung in senkrechter Richtung vom Werkstück weg eingeleitet werden.

Die Werkzeugmaschinensteuerung kann vom Hersteller und vom Anwender besonders einfach über eine grafische Bedienerführung im Dialogverfahren programmiert und bedient werden.

Ein Ausführungsbeispiel der Erfindung wird anhand der Zeichnung beschrieben. Dabei zeigen:
- Fig. 1: eine Werkzeugmaschine zur Bearbeitung von plattenförmigen Werkstücken,
- Fig. 2: die geometrische Lage von Werkzeugspindeln, Bohraggregaten und des Werkzeugträgernullpunktes im Werkzeugmaschinenkoordinatensystem,
- Fig. 3: das Blockschaltbild einer Werkzeugmaschinensteuerung.

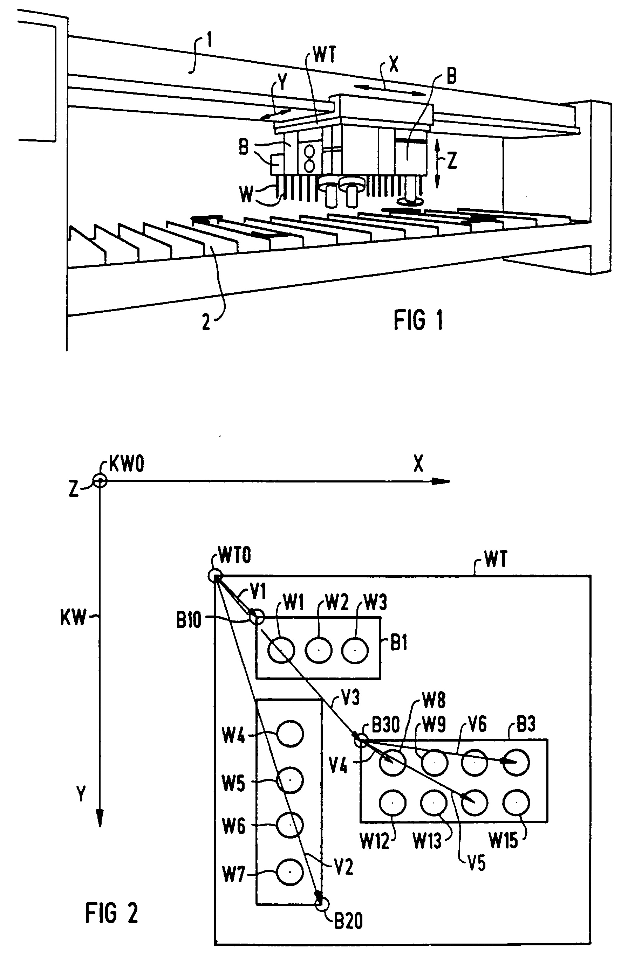

Fig. 1 zeigt die schematische Darstellung einer Werkzeugmaschine mit einem Werkzeugträger WT, der an einem Werkzeugmaschinenträger 1 verfahrbar aufgehängt ist. Dem Werkzeugträger WT ist ein Werkzeugträgerkoordinatensystem X, Y, Z zugeordnet, in dem er über Steuerbefehle einer nicht gezeigten Werkzeugmaschinensteuerung positionierbar ist. Am Werkzeugträger WT sind Bohr- und Fräsaggregate B angeordnet, die jeweils mindestens eine, in der Regel jedoch mindestens zwei Werkzeugspindeln aufweisen und die in der Regel über ein, jedem Bohraggregat zugeordnetes Getriebe angetrieben werden. Die Werkzeugspindeln nehmen Werkzeuge W, beispielsweise Bohrer auf, deren Spitzen nicht zwangsläufig, wie in Fig. 1 gezeigt, in einer Ebene angeordnet sein müssen, da auch Werkzeuge W verschiedener Geometrie, beispielsweise Bohrer unterschiedlichen Durchmessers und unterschiedlicher Längen, eingesetzt werden können. Der Werkzeugträger WT ist über einer Werkstückauflage 2 positionierbar. Auf die Werkstückauflage 2 können plattenförmige Werkstücke, beispielsweise Spanplatten, Tischlerplatten, Kunststoffplatten etc., gelegt werden. Die Werkstücke müssen jedoch nicht zwangsläufig eine plane Oberfläche aufweisen; es muß lediglich dafür gesorgt werden, daß sich die Werkzeuge W jeweils beabstandet von der erhabensten Stelle eines plattenförmigen Werkstückes befinden.

Soll mit einem Werkzeug W ein Bearbeitungsvorgang ausgeführt werden, so muß dieses Werkzeug in Arbeitsposition gebracht werden. Dazu wird es in axialer Richtung zur Werkstückauflage 2 verschoben. Diese Verschiebung wird - in der Regel über die Spindel - mit einem Stellglied bewirkt, das durch eine speicherprogrammierbare Steuerung angesteuert wird. Wenn sich das ausgewählte Werkzeug W in Arbeitsposition befindet, wird durch eine Zustellbewegung des Werkzeugträgers WT in Z-Richtung der Bearbeitungsvorgang ausgeführt. Dabei laufen die übrigen im Bohraggregat der ausgewählten Werkzeugspindel bzw. des ausgewählten Werkzeugs W befindlichen Spindeln leer mit, wenn sie über dasselbe Getriebe angetrieben werden.

Zur Positionierung eines ausgewählten Werkzeuges W an einen Bearbeitungspunkt muß der Werkzeugmaschinensteuerung die Position der Werkzeuge bzw. der Werkzeugspindeln W1...W21 bekannt sein, damit eine entsprechende Lagekorrektur innerhalb des Werkzeugmaschinenkoordinatensystems bei der Positionierung vorgenommen werden kann. Dies wird im folgenden anhand der Fig. 2 erläutert.

Fig. 2 zeigt einen Werkzeugträger WT, dem ein Werkzeugträger-Nullpunkt WTO zugeordnet ist. Am Werkzeugträger WT sind drei Bohraggregate B1, B2, B3 befestigt, wobei das Bohraggregat B1 die Werkzeugspindeln W1, W2, W3, das Bohraggregat W2 die Werkzeugspindeln W4...W7 und das Bohraggregat B3 die Werkzeugspindeln W8...W15 aufweist. Jedem Bohraggregat B1, B2, B3 ist ein Bohraggregat-Nullpunkt B10, B20, B30 zugeordnet. In der Darstellung sind die Bohraggregat-Nullpunkte B10, B20, B30 jeweils an einer Ecke der Bohraggregate B1, B2, B3 angeordnet, da sich ein solcher Eckpunkt gut für die Vermessung der Werkzeugspindeln W1...W15 eignet. Die Bohraggregate-Nullpunkte könnten aber ohne weiteres auch an einer anderen Stelle im Werkzeugmaschinen-Koordinatensystem KW, beispielsweise an einer anderen exponierten Stelle des Werkzeugträgers WT, festgelegt werden. Diese Stelle sollte so gewählt werden, daß eine möglichst einfache Vermessung zu den Werkzeugspindeln W1...W15 möglich ist. Für den Werkzeugträger-Nullpunkt WTO gilt das zu den Bohraggregate-Nullpunkten B10, B20, B30 Ausgeführte entsprechend.

Die Lage der Bohraggregate-Nullpunkte B10, B20, B30 bezüglich des Werkzeugträger-Nullpunktes WTO wird der Werkzeugmaschinensteuerung durch Vektoren V1, V2, V3 vorgegeben. Die Lage der Werkzeugspindeln W1...W15 bezüglich der Bohraggregate-Nullpunkte B10, B20, B30 wird der Werkzeugmaschinensteuerung ebenfalls durch Vektoren, von denen in Fig. 2 nur die Vektoren V4, V5, V6 gezeigt sind, vorgegeben. Da die Werkzeugmaschinensteuerung den gesamten Werkzeugträger über den Werkzeugträger-Nullpunkt WT im Werkzeugmaschinen-Koordinatensystem KW positioniert, muß zur Positionierung einer Werkzeugspindel W1... W15 die Lage dieser Werkzeugspindel als Positionskorrektur berücksichtigt werden. Diese Positionskorrektur kann über die Vektoren V1...V6, die der Werkzeugmaschinensteuerung als Maschinendaten vorgebbar sind, berechnet werden.

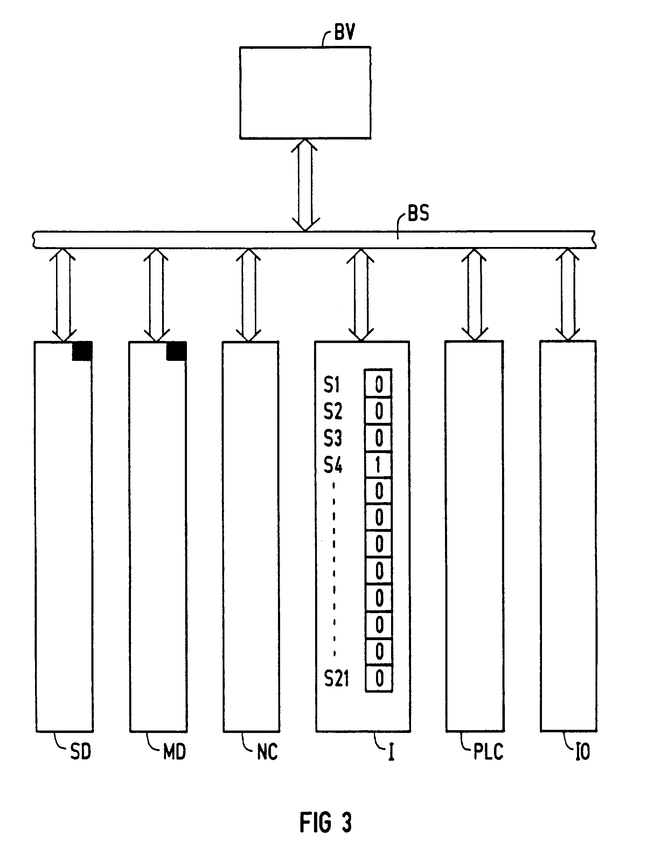

Diese Art der Vorgabe der Werkzeugspindeln W1...W15 zum Werkzeugträger-Nullpunkt erlaubt einen einfachen Austausch von Bohraggregaten, wenn für einen anderen Typ einer solchen Werkzeugmaschine der gleiche Werkzeugträger WT mit unterschiedlicher Bohraggregat-Konfiguration oder mit Bohraggregaten von unterschiedlicher Spindelbestückung verwendet werden soll. Wenn die Bohraggregate-Nullpunkte B10, B20, B30 nicht geändert werden, muß der Werkzeugmaschinensteuerung lediglich die neue Lage von Werkzeugspindeln gegenüber diesen Nullpunkten vorgegeben werden. Zum zweiten erlaubt diese Art der Vorgabe der geometrischen Lage der Werkzeugspindeln W1...W15 eine einfache und übersichtliche Ausführung bzw. Programmierung der Werkzeugmaschinensteuerung. Dies wird anhand der Fig. 3 näher beschrieben.

Fig. 3 zeigt das Blockschaltbild einer Werkzeugmaschinensteuerung mit einer Bedien- und Visualisiervorrichtung BV, die über ein Bussystem BS mit einem Speicher für Settingdaten SD, einem Speicher für Maschinendaten MD, einem numerischen Steuerteil NC, einem Interface I, einem speicherprogrammierbaren Steuerteil PLC und einer Ein-Ausgabe-Einheit IO verbunden ist. Im Speicher für die Settingdaten werden die geometrischen Daten der Werkzeuge hinterlegt, beispielsweise die jeweilige Länge der in den Werkzeugspindeln W1...W15 befestigten Bohrer. Im Speicher für die Maschinendaten MD wird die geometrische Lage der Werkzeugspindeln W1...W15, der Bohraggregate-Nullpunkte B10, B20, B30 und des Werkzeugträger-Nullpunktes WTO hinterlegt. Im numerischen Steuerteil NC werden dann die Verfahrwege für den Werkzeugträger unter Berücksichtigung der Positionskorrektur, also der Lage einer ausgewählten Werkzeugspindel W1...W15 zum Werkzeugträger-Nullpunkt über den jeweiligen Aggregate-Nullpunkt berechnet. Die speicherprogrammierbare Steuerung PLC übernimmt dann das Ausrücken der Werkzeugspindeln, so daß die Werkzeuge in Arbeitsposition gebracht werden.

Für das Zusammenspiel zwischen numerischem Steuerteil NC und speicherprogrammierbarem Steuerteil PLC ist das Interface I vorgesehen. Das Interface I weist Speicherplätze auf, wobei jeder Speicherplatz mindestens die Zustände "logisch Null" und "logisch Eins" speichern kann. Die Anzahl der Speicherplätze entspricht der Anzahl der Werkzeugspindeln W1...W21.

Um einen Positioniervorgang des Werkzeugträgers auszulösen, wird vom Anwender über die Bedien- und Visualisiereinheit BV eine Werkzeugspindel W1...W15 und die Position im Werkzeugträgerkoordinatensystem KW, an die diese Spindel gebracht werden soll, mit nur einem Befehl eingegeben. die numerische Steuerung berechnet dann anhand der im Speicher für Maschinendaten hinterlegten Geometrieangaben den Verfahrweg des Werkzeugträgers. Gleichzeitig wird im Interface I in dem der ausgewählten Werkzeugspindel zugeordneten Speicherplatz der Wert "logisch Eins" gesetzt. Die speicherprogrammierbare Steuerung PLC fragt die Zustände der Speicherplätze S1...S21 des Interfaces I zyklisch ab und gibt über die Ein-Ausgabe-Einheit IO einen Steuerbefehl an die Ausrückvorrichtung der ausgewählten Werkzeugspindel, das ist im Beispiel die Werkzeugspindel W4. Dieser Vorgang kann von der speicherprogrammierbaren Steuerung PLC gleichzeitig, während die numerische Steuerung NC den Verfahrweg berechnet oder den Werkzeugträger bereits verfährt, ausgeführt werden.

Es kann aber vorkommen, daß sich der Werkzeugträger WT in einer Z-Position relativ nahe über dem Werkstück befindet, so daß ein in Arbeitsposition zu bringendes Werkzeug bereits mit dem Werkstück in Kontakt käme, noch bevor sich der Werkzeugträger an der richtigen Position befindet. In diesem Fall muß die Z-Position vorher korrigiert werden. Dazu kann im Speicher für die Settingdaten SD die Länge der in den Spindeln W1...W15 angebrachten Werkzeuge hinterlegt werden. Die numerische Steuerung NC wird dann zunächst überprüfen, ob sich der Werkzeugträger in einer Z-Position befindet, die einen Sicherheitsabstand des Werkzeugs zum Werkstück bei ausgerückter Werkzeugspindel gewährleistet und diese Z-Position gegebenenfalls vor der Positionierung in XY-Richtung korrigieren und erst dann im Interface I das entsprechende Bit für die Werkzeugspindel W1...W21 setzen.

## Patentansprüche

1. Werkzeugmaschinensteuerungssystem zur Bearbeitung von plattenförmigen Werkstücken, insbesondere aus Holz oder Kunststoff, zur Steuerung der Position (X,Y,Z) und der Funktion eines Werkzeugträgers (WT) in einem Werkzeugträger-Koordinatensystem (KW),
wobei am Werkzeugträger mindestens ein Bearbeitungsaggregat (B1...B3) mit mindestens zwei über ein Getriebe angetriebenen Werkzeugspindeln (W1...W21) angebracht ist,
wobei dem Werkzeugträger (WT) ein Werkzeugträgerbezugspunkt (WT0) und jedem Bearbeitungsaggregat (B1...B3) ein Aggregatsbezugspunkt (B10...B30) zuordbar und in der Steuerung hinterlegbar ist,
wobei die Lage der Werkzeugspindeln (W1...W21) gegenüber dem Aggregatsbezugspunkten (B10...B30) und die Lage der Aggregatsbezugspunkte (B10...B30) gegenüber dem Werkzeugträgerbezugspunkt (WT0) vorgebbar ist und
wobei nach Vorgabe einer Werkzeugspindel (W1...W21) und einer Position für diese im Werkzeugträgerkoordinatensystem eine Positionierung des Werkzeugträgers (WT) erfolgt, indem die Lage der vorgegebenen Werkzeugspindel (W1...W21) bezüglich des Werkzeugträgerbezugspunktes (WT0) als Positionskorrektur berücksichtigt wird.

2. Werkzeugmaschinensteuerungssystem nach Anspruch 1 mit einem numerischen (NC) und einem speicherprogrammierbaren Steuerteil (PLC),
wobei mindestens zwei in Werkzeugspindelachsrichtung in Arbeitsposition verschiebbare Werkzeugspindeln (W1...W21) parallel angeordnet sind,
wobei jede ausgewählte Werkzeugspindel (W1...W21) durch Vorgabe eines Steuerbefehls gegenüber den nicht ausgewählten in Arbeitsposition gebracht wird und
wobei eine Positionierung und eine Vorschubbewegung des Werkzeugträgers (WT) vom numerischen Steuerteil (NC) und die Verschiebung der Werkzeugspindel (W1...W21) vom speicherprogrammierbaren Steuerteil (PLC) ausgeführt wird.

3. Werkzeugmaschinensteuerungssystem nach Anspruch 2,
wobei die Werkzeugspindeln (W1...W21) während des Positioniervorganges in Arbeitsposition gebracht werden.

4. Werkzeugmaschinensteuerungssystem nach Anspruch 3,
wobei vor der Axialverschiebung einer Werkzeugspindel (W1... W21) die Werkstückgeometrie (L) geprüft wird und die Axialverschiebung erst dann eingeleitet wird, wenn der Werkzeugträger (WT) so positioniert ist, daß das in Arbeitsposition zu bringende Werkzeug (W1...W21) einen Sicherheitsabstand zum Werkstück aufweist.

5. Werkzeugmaschinensteuerungssystem nach einem der vorstehenden Ansprüche,
wobei alle geometrischen Daten und Werkzeugkorrekturen über eine grafische Bedienerführung der Steuerung im Dialogverfahren vorgebbar sind.

## Claims

1. Machine-tool control system for machining plate-shaped workpieces, in particular of wood or plastics, for controlling the position (X, Y, Z) and the function of a tool support (WT) in a tool-support coordinate system (KW),
wherein there is applied to the tool support at least one machining unit (B1...B3) with at least two tool spindles (W1...W21) driven by way of a gearing,
wherein there can be associated with the tool support (WT) a tool-support reference point (WTO) and there can be associated with each machining unit (B1...B3) a unit reference point (B10...B30) and the tool-support reference point and the unit reference point can be stored in the control system,
wherein the position of the tool spindles (W1...W21) can be selected in relation to the unit reference points (B10...830) and the position of the unit reference points (B10...B30) can be selected in relation to the tool-support reference point (WTO), and wherein, after the selection of a tool spindle (W1...W21) and a position for this in the tool-support coordinate system, a positioning of the tool support (WT) takes place, in that the position of the selected tool spindle (W1...W21) in relation to the tool-support reference point (WTO) is considered as position correction.

2. Machine-tool control system according to claim 1, having a numerical (NC) and a memory-programmable control part (PLC),
wherein at least two tool spindles (W1...W21) displaceable in the direction of the tool spindle axis into the working position are arranged in parallel, wherein each selected tool spindle (W1...W21) is brought into the working position by selection of a control command compared to that which is not selected and
wherein a positioning and a feed motion of the tool support (WT) is carried out by the numerical control part (NC) and the displacement of the tool spindle (W1...W21) is carried out by the memory-programmable control part (PLC).

3. Machine-tool control system according to claim 2, wherein the tool spindles (W1...W21) are brought into the working position during the positioning procedure.

4. Machine-tool control system according to claim 3, wherein before the axial displacement of a tool spindle (W1...W21) the workpiece geometry (L) is examined and the axial displacement is only introduced when the tool support (WT) is positioned in such a way that the tool (W1...W21) to be brought into the working position is a safe distance from the workpiece.

5. Machine-tool control system according to one of the preceding claims, wherein all geometric data and tool corrections can be selected by way of a graphic operator guidance of the control system in the dialog method.

## Revendications

1. Système de commande de/machine-outils destiné à l'usinage de pièces plates à usiner, notamment en bois ou en matière plastique, à la commande de la position (X, Y, Z) et du fonctionnement d'un porte-outils (WT) dans un système de coordonnées du porte-outils,
au moins un agrégat (B1 à B3) d'usinage comportant au moins deux broches (W1 à W21) d'outils entraînées par l'intermédiaire d'une transmission étant logées dans le porte-outils,
un point (WTO) de référence de porte-outils pouvant être associé au porte-outil (WT) et un point (B10 à B30) de référence d'agrégat pouvant être associé à l'agrégat (B1 à B3) d'usinage et ceux-ci pouvant être enregistrés dans la commande,
la position des broches (W1 à W21) d'outils par rapport aux points (B10 à B30) de référence d'agrégat et la position des points (B10 à B30) de référence d'agrégat par rapport au point (WTO) de référence de porte-outils pouvant être prescrite et
un positionnement du porte-outils (WT) s'effectuant suivant la prescription d'une broche (W1 à W21) d'outil et d'une position pour celle-ci dans le système de coordonnées du porte-outils par le fait que la position de la broche (W1 à W21) d'outil prescrite par rapport au point (WTO) de référence du porte-outils est prise en compte en tant que correction de position.

2. Système de commande de machine-outils suivant la revendication 1, comportant une partie (NC) de commande numérique et une partie (PLC) d'automate industriel programmable,
au moins deux broches (W1 à W21) d'outils pouvant être décalées dans la direction de l'axe de broche d'outil dans la position de travail étant disposées en parallèle,
chaque broche (W1 à W21) d'outil sélectionnée étant amenée en position de travail par rapport à la broche non sélectionnée par prescription d'une instruction de commande et
un positionnement et un avancement du porte-outils (WT) étant effectués par la partie (NC) de commande numérique et le décalage de la broche (W1 à W21) d'outil étant effectué par la partie (PLC) d'automate industriel programmable.

3. Système de commande de machine-outils suivant la revendication 2,
dans lequel les broches (W1 à W21) d'outils sont amenées en position de travail pendant l'opération de positionnement.

4. Système de commande de machine-outils suivant la revendication 3,
dans lequel la géométrie (L) de la pièce à usiner est vérifiée avant le décalage axial d'une broche (W1 à W21) d'outil et le décalage axial n'est déclenché que lorsque le porte-outils (WT) est positionné de sorte que l'outil (W1 à W21) à amener en position de travail ait une distance de sécurité par rapport à la pièce à usiner.

5. Système de commande de machine-outils suivant l'une des revendications précédentes,
dans lequel toutes les données géométriques et corrections d'outils peuvent être prescrites, dans un procédé de dialogue, par guide opérateur graphique de la commande.
